# EUROPÄISCHE PATENTSCHRIFT

(11) **EP 1 178 096 B1**
(45) Veröffentlichungstag und Bekanntmachung des Hinweises auf die Patenterteilung: **14.08.2002**
(21) Anmeldenummer: 00115269.3
(22) Anmeldetag: 14.07.2000
(51) Int. Cl.: C09J 7/04

(54) **Beschichtetes satiniertes Papier mit Gummierung auf der Rückseite, die ein Antiblockmittel enthält**
Coated satinated paper with anti-blocking agent comprising adhesive layer on the back side
Papier satiné recouvert au verso d'une couche adhésive contenant un agent anti-bloquant

(43) Veröffentlichungstag der Anmeldung: 06.02.2002
(73) Patentinhaber: ZANDERS Feinpapiere AG, D-51465 Bergisch Gladbach (DE)
(72) Erfinder: Baur, Manfred, 52355 Düren-Derichsweiler (DE); Röthel, Günter, 52475 Aldenhoven (DE); Körner, Willi, 52372 Kreuzau (DE)
(74) Vertreter: Sternagel, Fleischer, Godemeyer & Partner Patentanwälte

(56) Entgegenhaltungen:
- EP-A- 0 560 174
- US-A- 5 296 535

## Beschreibung

Gegenstand der Erfindung ist ein gestrichenes satiniertes Papier, dessen Rückseite eine mit Wasser aktivierbare Gummierung aufweist, die mit einem teilchenförmigen Antiblockmittel versehen ist. Das Papier soll insbesondere als Briefmarkenpapier verwendet werden.

Aus EP-A-560 174 ist ein Papier bekannt, das mit einer heißsiegelfähigen Beschichtung versehen ist. Um die Neigung dieser Schicht zum Blocken zu verringern, enthält die Schicht unverkleisterte kalibrierte Stärkekörner mit einer mittleren Korngröße über 15 µm in einer Menge von 12 bis 15 Gew.%, bezogen auf die Trockensubstanz der heißsiegelfähigen Schicht. Die Größe der Stärkekörner ist so bemessen, daß die Körner bis an und über die Oberfläche der heißsiegelfähigen Schicht hinausreichen.

In US-A-5,296,535 ist eine wiederbefeuchtbare Gummierung für Papiere beschrieben, die u.a. auch für Briefmarken verwendet werden kann, die zum Verringern des hygroskopischen und thermoplastischen Blockens der Gummierung neben teilweise hydrolisiertem Polyvinylalkohol als Klebstoff einen chemisch inerten, nicht thermoplastischen, in kaltem Wasser unlöslichen teilchenförmigen Zusatz mit einer Partikelgröße von unter 30 µm, vorzugsweise unter 20 µm, ganz besonders bevorzugt unter 10 µm enthält. Als geeignete Zusätze sind Clay, Talk, Calciumcarbonat, Gips, Glimmer und nicht gelatinierte Stärkekörner beschrieben, wobei Clay besonders bevorzugt ist.

Gestrichenes, d.h. mit Pigment, Bindemittel und üblichen Hilfsstoffen beschichtete Briefmarkenpapiere weisen auf der Rückseite übliche Gummierungen auf. Derartige Papiere werden zur Verbesserung der Oberflächenglätte in der Regel mittels Kalander stark satiniert und neigen deshalb besonders stark zum Blocken.

Es ist grundsätzlich bekannt, die Blockneigung von Beschichtungen, beispielsweise von Gummierungen, durch Einbau von inerten, teilchenförmigen Materialien geeigneter Korngröße zu verringern. Untersuchungen ergaben jedoch, daß mineralische Teilchen, Kunststoffteilchen ungeeignet sind, weil die Partikel durch die Satinage zerbrochen oder so in das Papiergefüge eingepreßt werden, daß sie ihre Funktion als Abstandhalter und Antiblockmittel verlieren.

Aufgabe der Erfindung ist es, einen Zusatz zu Gummierungen aufzuzeigen, der die Blockneigung von gummierten gestrichenen Papieren nach Satinage verringert und der von seiner Oberflächenbeschaffenheit so geartet ist, daß die glatte empfindliche Oberfläche des pigmentierten Striches bei Kontakt nicht beeinträchtigt wird.

Diese Aufgabe wird gelöst durch ein auf der Vorderseite mit Pigment und Bindemittel beschichtetes, auf der Rückseite eine Gummierung aufweisendes satiniertes Papier, dessen Gummierungsschicht eine Schichtdicke von 7 µm bis 25 µm aufweist und native ungelierte Stärkekörner mit einer mittleren Teilchengröße enthält, die gleich oder größer ist als die Schichtdicke der Gummierungsschicht.

Die mittlere Teilchengröße der Stärkekörner kann 15 µm bis 35 µm, bevorzugt 20 µm bis 25 µm betragen.

Völlig überraschend wurde gefunden, daß native ungelierte Weizenstärke, Roggenstärke, Maisstärke, Reisstärke und Kartoffelstärke oder Mischungen derselben bei der Druckeinwirkung und Scherung während der Satinage aufgrund ihrer physikalischen Struktur und Festigkeit nicht zerstört werden und ihre Lage in der Gummierungsschicht beibehalten, so daß ihre Funktion als "Abstandhalter" und Antiblockmittel nach der Satinage erhalten bleibt.

Das Auftragsgewicht (trocken) der Gummierungsschicht kann von 7 g/m² bis 25 g/m², vorzugsweise 10 g/m² bis 15 g/m² betragen. Die Schichtdicke der Gummierungsschicht nach der Satinage beträgt 7 µm bis 25 µm, vorzugsweise 10 µm bis 15 µm.

Die Gummierungsschicht enthält als mit Wasser aktivierbare Klebstoffe, wie teilverseiftes Polyvinylacetat, teil- oder vollverseiften Polyvinylalkohol, Dextrine oder Mischungen derselben.

Die Gummierungsschicht kann außerdem noch übliche Hilfs- und Zusatzstoffe enthalten, wie Farbstoffe.

Das Streichrohpapier ist vorzugsweise ein holzfreies Papier mit einem Flächengewicht von 50 g/m² bis 120 g/m², besonders bevorzugt von 50 g/m² bis 80 g/m².

Das Streichrohpapier enthält neben den Zellulosefasern übliche Bestandteile, wie mineralische Füllstoffe, Leimungsmittel, Farbstoffe, sowie übliche Sicherheitsmittel, wie fluoreszierende Melierfasern und/oder spezielle optische Aufheller. Es kann sauer, neutral oder alkalisch geleimt sein.

Die Vorderseite' des Papiers ist mit einer Pigment, Bindemittel und übliche Hilfsstoffe enthaltenden Beschichtung versehen, um die Bedruckbarkeit zu verbessern.

Geeignete Pigmente für die Beschichtung auf der Vorderseite sind Kaolin, gemahlenes natürliches ebenso wie gefälltes Calciumcarbonat, Satinweiß, Plastikpigment, die auch in Mischungen verwendet werden können.

Geeignete Bindemittel sind Kasein, Stärke, in Wasser lösliche synthetische Polymere, wie Polyvinylalkohol, synthetische Polymere in Form wässeriger Dispersionen, wie Styrol/Butadiencopolymere, Butadien/Acrylsäurepolymere, die auch als Latexbinder bezeichnet werden. Bindemittelkombinationen, insbesondere von in Wasser löslichen Bindemitteln und in Wasser dispergierten synthetischen Polymeren können verwendet werden.
Der Bindemittelgehalt kann von 5 Gew.Tl. bis 20 Gew.Tl. pro 100 Gew.Tl. Pigment betragen.

Das Auftragsgewicht (trocken) der pigmentierten Beschichtung kann von 5 g/m² bis 35 g/m² betragen, vorzugsweise 15 bis 25 g/m².

Bei Verwendung des erfindungsgemäßen Papieres als Briefmarkenpapier kann die Beschichtung auf der Vorderseite Zusätze enthalten, die als Sicherheitskennzeichen die Identifizierung des Papiers erleichtern, beispielsweise Fluoreszenzmittel auf der Basis wasserunlöslicher Oxazinone.
Tabelle 1 zeigt die Zusammensetzung der Vorderseitenbeschichtung. Die Einsatzmengen der Stoffe werden als Gewichtsteile der Trockensubstanz angegeben. Trockensubstanz (otro) ist erhältlich durch Ofentrocknung des betreffendes Stoffes bei 105°C bis zur Gewichtskonstanz. Gew.% Trockensubstanz im Stoff bedeutet ofentrockenes Material in Gew.% bezogen auf Gewicht des Stoffes im Anlieferzustand.

**Tabelle 1**

| Stoffe | Gew.-% Trockensubstanz im Stoff | Gew.Teile |
|---|---|---|
| Kaolin¹⁾ | 90 % | 70 |
| Satinweiß | 30 % | 20 |
| CaCO₃²⁾ | 70 % | 10 |
| Kasein | 90 % | 7.5 |
| PVAc/Acrylester-Copolymer³⁾ | 25 % | 20 |
| Hilfsstoffe | | 2 |
| Wasser | | 140 |

| | | |
|---|---|---|
| ¹⁾ handelsübliche Typen, erhältlich von ECC International Ltd. | | |
| ²⁾ handelsübliche Typen, erhältlich von Plüss-Staufer A.G. | | |
| ³⁾ handelsübliche Typen, erhältlich von BASF A.G. | | |

Das satinierte Papier hat eine Dicke von 60 µm bis 130 µm, vorzugsweise von 80 µm bis 100 µm und ein Flächengewicht von 70 g/m² bis 150 g/m², vorzugsweise von 90 g/m² bis 110 g/m².

Das satinierte Papier hat eine Oberflächenrauhigkeit, gemessen nach dem Parker-Print-Surf-Verfahren (PPS) nach DIN-ISO 8791 von 2 µm bis 3 µm. Weiterhin weist das satinierte Papier eine Glätte nach dem Luftstromverfahren nach Bekk (DIN 53107) von ca. 400 s und einen Glanz nach DIN 5402 R'75 (Meßwinkel 75°) von 3.5 auf. Das unsatinierte Papier hat eine Glätte von 30 s und einen Glanz unter 1.

Das gestrichene und auf der Rückseite mit Gummierung versehene Papier wird einer Kalanderbehandlung, die auch als Satinage bezeichnet wird, unterzogen, um die Oberflächenglätte und die damit korrelierende Bedruckbarkeit des Papiers zu verbessern. Zusätzlich wird der ästhetische Eindruck des Papiers durch die erreichten Glätte- und Glanzgewinne gesteigert.

Die Satinage erfolgt üblicherweise auf Mehrwalzenkalandern mit Liniendrucken von 250 KN/m bis 500 KN/m. Die Umfangsgeschwindigkeit der Walzen kann von der Bahngeschwindigkeit des Papieres abweichen, so daß die Papieroberflächen im Walzenspalt nicht nur mit Druck beaufschlagt werden, sondern auch eine Friktion einwirkt.

Die Erfindung wird anhand der nachfolgenden Beispiele noch näher erläutert.

Tabelle 2 zeigt die erprobten erfindungsgemäßen Rezepturen sowie als Vergleichsbeispiel eine Rezeptur unter Verwendung von Kaolin. Die Einsatzmengen der Stoffe werden als "Teile" angegeben. "Teile" sind zu verstehen als Gew.-Teile Trockensubstanz "otro" ("otro" Trockensubstanz ist erhältlich durch Ofentrocknung des betreffenden Stoffes bei 105°C Trockentemperatur bis zur Gewichtskonstanz). "Gew.% Trockenstoff im Stoff" bedeuten ofentrockenes Material in Gew.% bezogen auf Gewicht des Stoffes im Anlieferzustand. Teile Wasser" sind zu verstehen als Gew.-Teile Wasser.

Tabelle 2 gibt auch die Testergebnisse für die Eigenschaften "Klebkraft" und "Verblockungsneigung" der aus den Beispielen erhaltenen Papiermuster an. Die Benotungsskala reicht von 1 (= gut) bis 6 (= schlecht).

**Tabelle 2**

| Stoffe | Gew.-% Trockensubstanz im Stoff | B 1 Teile in R 2 | B 2 Teile in R 3 | B 3 Teile in R 1 | VB 1 Teile in R 4 |
|---|---|---|---|---|---|
| Gummierungsdispersion ¹⁾ | 41 % | 123 | 123 | 123 | 123 |
| Weizenstärke ²⁾ | 89 % | 11,0 | 5,5 | 0 | 0 |
| Kartoffelstärke ³⁾ | 80 % | 0 | 5,5 | 0 | 0 |
| Kaolin ⁴⁾ | 91 % | 0 | 0 | 0 | 28.2 |
| Wasser | | 134 | 133 | 110 | 182 |
| Klebkraft, Note | | 3 - 4 | 3 - 4 | 3 - 4 | 6 |
| Verblockungsneigung,Note | | 1 - 2 | 2 | 5 - 6 | 1 |

| | | | | | |
|---|---|---|---|---|---|
| ¹⁾ National 972-0007, erhältlich von National Starch & Chemical | | | | | |
| ²⁾ Amyzet 262, erhältlich von Amylum | | | | | |
| ³⁾ Perfectamyl A 5760, erhältlich von AVEBE | | | | | |
| ⁴⁾ handelsübliche Typen, erhältlich von ECC International Limited | | | | | |

### Beispiel 1

Auf einer Langsiebpapiermaschine wird ein Papier mit einer flächenbezogenen Masse von 60 g/m² otro hergestellt. Die Papierstoffzusammensetzung besteht aus 65 Gew.-% Nadelholzsulfatzellstoff tcf und 35 Gew.-% Eukalyptussulfatzellstoff tcf. Die Papierleimung erfolgt mit Harzleim. Kaolin wird in einer Menge von 15 Gew.-% als Füllstoff eingesetzt. Der Anteil an Zusatz- und Hilfsstoffen beträgt 3,5 Gew.-%. Die Prozentangaben der nicht faserigen Zusätze beziehen sich auf den Faserstoffanteil. Das so hergestellte Papier wird zuerst auf einer Seite mit einer pigmentierten Streichfarbe (Rezept siehe Tabelle 1) so gestrichen, daß ein otro-Strichauftrag von 21 g/m² nach der Trocknung mittels Heissluft und Infrarot-Strahlung resultiert. Die Gegenseite des Papieres wird mit einer Gummierungslösung gestrichen, die Weizenstärke enthält (siehe Tabelle 2; Rezept 2), und nach der Trocknung mittels Heissluft eine otro-Gummierungsbeschichtung von 11 g/m² aufweist. Abschließend wird das beidseitig gestrichene Papier auf einem Mehrwalzenkalander mit 340 KN/m Liniendruck satiniert. Das so erhaltene Papier besitzt hohe Glätte und hohen Glanz und wird sowohl einer Prüfung auf "Klebekraft" als auch einer Prüfung auf "Verblockungsneigung" unterzogen.

### Prüfung der Klebekraft:

Aus dem nach Beispiel 1 erhaltenen Papier wird quer zu seiner Laufrichtung ein 2 cm breiter Streifen herausgeschnitten. Dieser Streifen wird mit einem feuchten (Wasser) Schwamm gleichmäßig und ohne Druck angefeuchtet. Der befeuchtete Prüfling wird leicht auf das Standardpapier angepreßt und nach 5 Sekunden abgezogen und beurteilt.
Note 1: Starke Verklebung und vollständiger Faserausriß aus dem Standardpapier.
Note 2 : Gute Verklebung mit teilweisem Faserausriß.
Note 3 : Befriedigende Verklebung, vereinzelt Faserausriß.
Note 4 : Gerade ausreichende Verklebung.
Note 5 : Geringfügige, mangelhafte Verklebung.
Note 6 : Keine Haftung.

### Prüfung der Verblockungsneigung:

Zehn quadratisch zugeschnittene Prüflinge mit den Maßen 5,5 cm x 5,5 cm werden aufeinander gelegt, jeweils mit der gummierten Seite unten liegend. Dieser aus den Prüflingen bestehende Stapel wird in einem Klima von 80 - 85 % relativer Feuchte und bei 20°C mit einem Gewicht von 3 kg oder gegebenenfalls von 5 kg belastet. Nach 48 Stunden Verweildauer wird der Stapel von den Gewichten entlastet. Bei der Auftrennung des Stapels in seine einzelnen Lagen werden visuelle und akustische Wahrnehmungen registriert und entsprechend ihrer Stärke benotet.
Note 1 : Papiere haften nicht und fallen ohne Wechselwirkung auseinander.
Note 2 : Leichtes Knistern beim Trennen.
Note 3 : Starkes Knistern beim Trennen.
Note 4 : Leichte Beschädigungen in der/den Beschichtung/en beim Trennen.
Note 5 : Starke Beschädigungen in der/den Beschichtung/en beim Trennen.
Note 6 : Prüflinge sind verblockt.

Die Prüfung des nach Beispiel 1 erhaltenen Papiers weist eine sehr gute Kombination der Werte für Klebekraft (3-4) und Verblockungsneigung (1-2) aus (siehe Tabelle 2).

### Beispiel 2

Das wie in Beispiel 1 erhaltene, auf der Vorderseite mit pigmentierter Streichfarbe gestrichene und mit Heissluft und Infrarot-Strahlung getrocknete Papier wird so mit einer eine Mischung aus Weizenstärke und Kartoffelstärke enthaltenden Gummierungslösung beschichtet (siehe Tabelle 1; Rezept 3), daß nach der Trocknung mit Heissluft die resultierende Gummierungsbeschichtung 11 g/m² otro aufweist. Abschließend wird das beidseitig gestrichene Papier auf einem Mehrwalzenkalander mit 340KN/m Liniendruck satiniert. Das so erhaltene Papier besitzt hohe Glätte und hohen Glanz. Die Prüfung des nach Beispiel 2 erhaltenen Papiers weist eine sehr. gute Kombination der Werte für Klebekraft (3-4) und Verblockungsneigung (2) auf (siehe Tabelle 2).

### Beispiel 3

Das wie in Beispiel 1 erhaltene, auf der Vorderseite mit pigmentierter Streichfarbe gestrichene und mit Heissluft und Infrarot-Strahlung getrocknete Papier wird mit einer Gummierungslösung, die keine Stärke als Abstandshalter (siehe Tabelle 2; Rezept 1) enthält, so beschichtet, daß nach der Trocknung mit Heissluft die resultierende Gummierungsbeschichtung 11 g/m² otro aufweist.
Im Anschluss wird das beidseitig gestrichene Papier auf einen Mehrwalzenkalander mit 340kN/m Liniendruck satiniert. Das so erhaltene Papier besitzt hohe Glätte und hohen Glanz. Die Prüfung des nach Beispiel 3 erhaltenen Papiers weist eine mäßig gute Kombination der Werte für Klebekraft (3-4) und Verblockungsneigung (5-6) auf (siehe Tabelle 2).

### Vergleichsbeispiel 1:

Dieses Vergleichsbeispiel basiert auf US-A-5,296,535 und zeigt, daß bei Verwendung von Kaolin als Abstandhalter die Wirkung des Abstandhalters nach Satinage nicht mehr vorhanden ist. Dies dürfte durch die Struktur der Teilchen bedingt sein und auch bei höheren Gehalten von Kaolin ist keine Verbesserung zu erwarten.

Das wie in Beispiel 1 erhaltene, auf der Vorderseite mit pigmentierter Streichfarbe gestrichene und mit Heissluft und Infrarot-Strahlung getrocknete Papier wird mit einer Gummierungslösung, die Kaolin als Abstandshalter (siehe Tabelle 2; Rezept 4) enthält, so beschichtet, daß nach der Trocknung mit Heissluft die resultierende Gummierungsbeschichtung 11 g/m² otro aufweist. Im Anschluss wird das beidseitig gestrichene Papier auf einen Mehrwalzenkalander mit 340KN/m Liniendruck satiniert.
Das so erhaltene Papier besitzt hohe Glätte und hohen Glanz. Die Prüfung des nach Vergleichsbeispiel 1 erhaltenen Papiers weist eine sehr schlechte Kombination der Werte für Klebekraft (6) und Verblockungsneigung (1) auf (siehe Tabelle 2).

## Patentansprüche

1. Beschichtetes, satiniertes Papier, auf dessen Vorderseite Pigment und Bindemittel enthaltende Schicht und auf dessen Rückseite eine Gummierung angeordnet ist, wobei die Gummierungsschicht eine Schichtdicke von 7 µm bis 25 µm aufweist und native ungelierte Stärkekörner mit einer mittleren Teilchengröße enthält, die gleich oder größer ist als die Schichtdicke der Gummierungsschicht.

2. Beschichtetes Papier nach Anspruch 1, **dadurch gekennzeichnet, daß** die mittlere Teilchengröße der Stärkekörner 15 µm bis 35 µm beträgt.

3. Beschichtetes Papier nach Anspruch 1 oder 2, **dadurch gekennzeichnet, daß** die Stärkekörner Weizenstärke, Maisstärke, Roggenstärke, Reisstärke, Kartoffelstärke oder Mischungen derselben sind.

4. Beschichtetes Papier nach einem der vorstehenden Ansprüche, **dadurch gekennzeichnet, daß** die mit Wasser aktivierbare Gummierungsschicht teil- oder vollverseiftes Polyvinylacetat, teil- oder vollverseiften Polyvinylalkohol, verkleisterte Stärke(n) oder Mischungen derselben als Klebstoff enthält.

5. Beschichtetes Papier nach Anspruch 1, **dadurch gekennzeichnet, daß** das Auftragsgewicht (trocken) der Gummierungsschicht 7 g/m² bis 25 g/m² beträgt.

6. Beschichtetes Papier nach einem der vorstehenden Ansprüche, **dadurch gekennzeichnet, daß** die Dicke des satinierten Papiers von 60 µm bis 130 µm beträgt.

7. Verwendung des beschichteten Papiers nach einem der vorstehenden Ansprüche 1 bis 6 als Briefmarkenpapier.

## Claims

1. Coated, glazed paper on whose front side a layer containing pigment and binder and on whose rear side a gumming is arranged, wherein the gumming layer has a layer thickness of 7 to 25 µm and contains native non-gelled starch granules with a mean particle size which is equal to or greater than the layer thickness of the gumming layer.

2. Coated paper according to claim 1, **characterised in that** the mean particle size of the starch granules comes to 15 to 35 µm.

3. Coated paper according to claim 1 or 2, **characterised in that** the starch granules are wheat starch, maize starch, rye starch, rice starch, potato starch or mixtures of the same.

4. Coated paper according to any one of the preceding claims, **characterised in that** the gumming layer activatable with water contains as adhesive partly or completely saponified polyvinyl acetate, partly or completely saponified polyvinyl alcohol, gelatinized starch(es) or mixtures of the same.

5. Coated paper according to claim 1, **characterised in that** the rate of application (dry) of the gumming layer comes to 7 to 25 g/m².

6. Coated paper according to any one of the preceding claims, **characterised in that** the thickness of the glazed paper is from 60 to 130 µm.

7. Use of the coated paper according to any one of the above claims 1 to 6 as postage stamp paper.

## Revendications

1. Papier recouvert satiné dont le recto est enduit de pigments et de liants et dont le verso présente une couche adhésive, dans lequel la couche adhésive présente une épaisseur de couche de 7 µm à 25 µm et contient des grains d'amidon natifs non gélifiés d'une granulométrie moyenne égale ou supérieure à l'épaisseur de couche de la couche adhésive.

2. Papier recouvert selon la revendication 1, **caractérisé en ce que** la granulométrie moyenne des grains d'amidon est comprise entre 15 µm et 35 µm.

3. Papier recouvert selon la revendication 1 ou 2, **caractérisé en ce que** les grains d'amidon sont de l'amidon de blé, de l'amidon de seigle, de l'amidon de maïs, de l'amidon de riz, de l'amidon de pomme de terre ou des mélanges de ceux-ci.

4. Papier recouvert selon l'une des revendications précédentes, **caractérisé en ce que** la couche adhésive activable à l'eau contient comme matière adhésive de l'acétate de polyvinyle partiellement ou entièrement saponifié, de l'alcool polyvinylique partiellement ou entièrement saponifié, de l'amidon encollé ou des mélanges de ceux-ci.

5. Papier recouvert selon la revendication 1, **caractérisé en ce que** le poids d'application (sec) de la couche adhésive est compris entre 7 g/m² et 25 g/m².

6. Papier recouvert selon l'une des revendications précédentes, **caractérisé en ce que** l'épaisseur du papier satiné est comprise entre 60 µm et 130 µm.

7. Utilisation de papier recouvert selon l'une des revendications précédentes 1 à 6 comme papier à timbres.
